## Europäisches Patentamt

## European Patent Office

## Office européen des brevets

(11) Veröffentlichungsnummer: **0 194 486**
**B1**

(12) # EUROPÄISCHE PATENTSCHRIFT

(45) Veröffentlichungstag der Patentschrift:
05.07.89

(51) Int. Cl.⁴: **B 67 D 3/00**

(21) Anmeldenummer: **86102241.6**

(22) Anmeldetag: **20.02.86**

(54) Vorrichtung zum dosierten Ausschenken und Registrieren von Flüssigkeiten.

(30) Priorität: **14.03.85 DE 3509189**

(43) Veröffentlichungstag der Anmeldung:
**17.09.86 Patentblatt 86/38**

(45) Bekanntmachung des Hinweises auf die Patenterteilung:
**05.07.89 Patentblatt 89/27**

(84) Benannte Vertragsstaaten:
**AT BE CH DE LI NL SE**

(56) Entgegenhaltungen:
**WO-A-84/01936**
**WO-A-84/01937**
**DE-A- 2 548 442**
**GB-A- 2 084 546**
**GB-A- 2 144 397**
**US-A- 3 675 820**

(73) Patentinhaber: **Albrecht, Peter, Klosterweg 5,
D-3300 Braunschweig (DE)**

(72) Erfinder: **Albrecht, Peter, Klosterweg 5,
D-3300 Braunschweig (DE)**

(74) Vertreter: **Lins, Edgar, Dipl.-Phys. et al, Patentanwälte
Gramm + Lins Theodor-Heuss-Strasse 2,
D-3300 Braunschweig (DE)**

## Beschreibung

Vorrichtung zum dosierten Ausschenken und Registrieren von Flüssigkeiten

Die Erfindung betrifft eine Vorrichtung zum dosierten Ausschenken und Registrieren von aus einer Flasche ausgeschenkten Flüssigkeiten, bestehend aus einem am Flaschenhals angebrachten, magnetisch zu öffnenden und in seiner Ruhestellung geschlossenen Magnetventil, dessen Gehäuse mit Codierzeichen versehen ist, mit einem ortsfest installierten Betätigungskopf mit einer nach oben offenen Aufnahmeöffnung, einer Betätigungsspule für das in die Aufnahmeöffnung eingeführte Magnetventil und einer Leseeinrichtung für die Codierzeichen, und mit einer stationär installierten Registriereinrichtung, die mit dem Betätigungskopf verbunden ist.

Eine bekannte und in der Praxis verwendete Vorrichtung zum dosierten Ausschenken und Registrieren aus einer Flasche ausgeschenkter Flüssigkeiten ist durch die DE-A-25 48 442 bekannt. Bei ihr wird ein Magnetventil in den Flaschenhals eingesetzt. Das Gehäuse des Magnetventils ragt aus dem Flaschenhals heraus und ist an der Aussenseite des aus dem Flaschenhals herausragenden Gehäuseteils mit Codierzeichen versehen. Auf den Flaschenhals ist ein Betätigungskopf aufschiebbar, der mit Hilfe eines flexiblen Kabels mit einer stationär installierten Registriereinrichtung verbunden ist. Die Flasche mit dem aufgesetzten Betätigungskopf ist nun normal handhabbar, d.h. das Entleeren erfolgt durch das Auf-den-Kopf-stellen der Flasche, wobei die Entleerung durch die das Magnetventil für eine bestimmte Zeitspanne öffnende Betätigungsspule gesteuert wird. Die Öffnungszeit des Magnetventils wird in der Registriereinrichtung mit einer ausgeflossenen Flüssigkeitsmenge korreliert, dessen Art bzw. Preis von der Registriereinrichtung durch die gelesenen Codierzeichen erkannt wird.

Die bekannte Vorrichtung geht davon aus, dass das Ausschenken der Getränke an verschiedenen Orten möglich sein soll. Durch die Verbindung des Betätigungskopfes mit der stationär installierten Registriereinrichtung steht allerdings nur ein sehr begrenzter Bewegungsraum zur Verfügung. Die bekannte Vorrichtung eignet sich nur für dünnflüssige Substanzen, die in grössenordnungsmässig gleichen (kleinen) Mengen ausgeschenkt werden. Die Öffnung des Magnetventils für eine vorbestimmte Zeit erlaubt nicht, die verschiedenen Viskositäten verschiedener Getränke zu berücksichtigen. Da üblicherweise mehrere Getränke zu einer Preisgruppe zusammengefasst werden und diese Getränke somit eine gleiche Codierung erhalten, ist eine Differenzierung nach Viskositäten in der Praxis nicht durchführbar. Bei den bekannten Vorrichtungen müssen daher nicht unerhebliche Schwankungen der ausgeschenkten Flüssigkeitsmenge in Kauf genommen werden. Ein weiterer Nachteil der bekannten Vorrichtungen besteht darin, dass die die Öffnung der Magnetventile bewirkenden Betätigungköpfe in der Hand gehalten werden und während des Umschliessens ihres Gehäuses mit der Hand mittels Magneten manipulierbar sind. Auf diese Weise können Getränke ausgeschenkt werden, ohne dass diese registriert werden, weil das Öffnungssignal für die Registriereinrichtung nicht ausgelöst worden ist.

Es sind ferner preiswert herstellbare und rein mechanisch wirkende Dosiereinrichtungen bekannt, die in den jeweiligen Flaschenhals als Verschluss einsteckbar sind. Für die Dauer der Entleerung der Flasche bleiben sie mit dieser Flasche verbunden. Eine Registrierung der ausgeschenkten Flüssigkeitsmengen ist damit nicht vorgesehen.

Durch die WO 87/01936 ist eine Vorrichtung der eingangs erwähnten Art bekannt. Das Gehäuse mit dem Magnetventil wird dabei lediglich am Flaschenhals befestigt, hat aber alle Funktionsteile, nämlich Magnetventil und Codiereinrichtungen, oberhalb der Ausgiessmündung der Flasche angeordnet. Das lange Gehäuse ragt durch einen am Thekentisch befestigten Betätigungskopf hindurch, mit dem einerseits die Codierung am Gehäuse lesbar und andererseits das Magnetventil durch eine Betätigungsspule des Betätigungskopfes zu öffnen ist. Die Öffnung erfolgt in üblicher Weise über eine Zeitsteuerung.

Durch die WO 84/01937 ist eine ähnliche Anordnung bekannt, bei der eine Magnetventilanordnung magnetisch so steuerbar ist, dass in dem Gehäuse eine Dosierkammer mit der Flüssigkeit aus der Flasche gefüllt wird, so dass eine dem Dosierkammervolumen entsprechende Flüssigkeitsmenge ausgeschenkt wird. Die hierfür erforderliche Anordnung ist kompliziert und erlaubt keine Änderung der ausgeschenkten Flüssigkeitsmenge.

Aus der GB-A-2 084 546 ist eine Durchflussmengenmesseinrichtung für Bierausschankleitungen bekannt, deren Ungenauigkeit dadurch kompensiert werden soll, dass eine Beziehung zu den normalerweise ausgeschenkten Biermengen hergestellt wird.

Der Erfindung liegt die Aufgabe zugrunde, eine Vorrichtung der eingangs erwähnten Art zu erstellen, die eine flexible und genaue Dosierung auch bei verschiedenen Viskositäten der Flüssigkeiten erlaubt und für das Ausschenken aller Getränkeflüssigkeiten geeignet ist.

Diese Aufgabe wird erfindungsgemäss bei einer Vorrichtung der eingangs erwähnten Art dadurch gelöst, dass der Betätigungskopf einen Flüssigkeitskanal, einen der Betätigungsspule nachgeschalteten Durchflussmesser, der die Öffnungszeit der Betätigungsspule steuert, und einen Einspritzspalt aufweist, durch den eine vorbestimmte Wassermenge in den Flüssigkeitskanal nach der Dosierung einspritzbar ist.

Da die Steuerung der Betätigungsspule von dem Durchflussmesser erfolgt, wird eine gewünschte Menge unabhängig von der Viskosität korrekt dosiert. Die in der stationären Anordnung des Betätigungskopfes montierte Betätigungsspule kann gross und kräftig genug ausgebildet sein, um auch in schwierigen Fällen eine Flasche zu öffnen, beispielsweise bei Getränken mit einer hohen Viskosität, die leicht das Verkleben des Magnetventils verursachen. Mit dem erfindungsgemässen Betätigungskopf lassen sich auch geeiste Getränke ausschenken.

Durch die Steuerung der Betätigungsspule durch den Durchflussmesser ist es möglich, einen sehr grossen Ausströmquerschnitt vorzusehen, so dass innerhalb einer kurzen Zeit auch grössere Mengen, beispielsweise für Long-Drinks, ausgeschenkt werden können. Die bisher bekannte Steuerung der Öffnung des Magnetventils mit einer Zeitsteuerung hätte bei einem grossen Ausströmquerschnitt zu grossen Dosierfehlern geführt, so dass bisher nur geringe Ausströmquerschnitte verwendet werden konnten. Die geringen Ausströmquerschnitte erlaubten aber nicht das Ausschenken von beispielweise, 0,2 l beispielsweise 0,2 l Wein innerhalb einer wirtschaftlich erträglichen Zeit, so dass die bekannten Geräte für derartige Anwendungsfälle nicht brauchbar waren.

Der erfindungsgemässe Betätigungskopf weist einen Flüssigkeitskanal mit einem genau bestimmten Ausströmquerschnitt im Bereich des Durchflussmessers auf. Dadurch ist die gewünschte Genauigkeit der Durchflussmessung leicht erreichbar. Die Verwendung dieses Betätigungskopfes für verschiedenste Flüssigkeiten ist erfindungsgemäss dadurch möglich, dass der Betätigungskopf einen Einspritzspalt aufweist, durch den eine vorbestimmte Wassermenge in den Flüssigkeitskanal nach der Dosierung einspritzbar ist. Dadurch wird der Flüssigkeitskanal nach jeder Dosierung automatisch von der betreffenden Flüssigkeit gereinigt. Die für die Reinigung eingespritzte Wassermenge kann in Abhängigkeit von der gelesenen Codierung einstellbar sein, so dass beispielsweise für Säfte eine grössere Wassermenge für die Spülung zur Verfügung steht als für Spirituosen.

Wenn sich der Einspritzspalt axial in Strömungsrichtung gesehen konisch verengt und an der Umfangswandung des Flüssigkeitskanals ringartig in diesen mündet, lässt sich ein Spritzen des Wassers nach oben, also in Richtung auf die Aufnahmeöffnung, wirksam vermeiden.

Eine einfache Bedienung der erfindungsgemässen Vorrichtung lässt sich dadurch erreichen, dass die Leseeinrichtung für die Codierzeichen durch das Einschieben der Flasche in den Betätigungskopf wirksam geschaltet und die Öffnung durch die Betätigungsspule nur möglich ist, wenn unterhalb des Betätigungskopfes ein Sensor erkannt hat, dass unter den Betätigungskopf ein Glas gestellt worden ist.

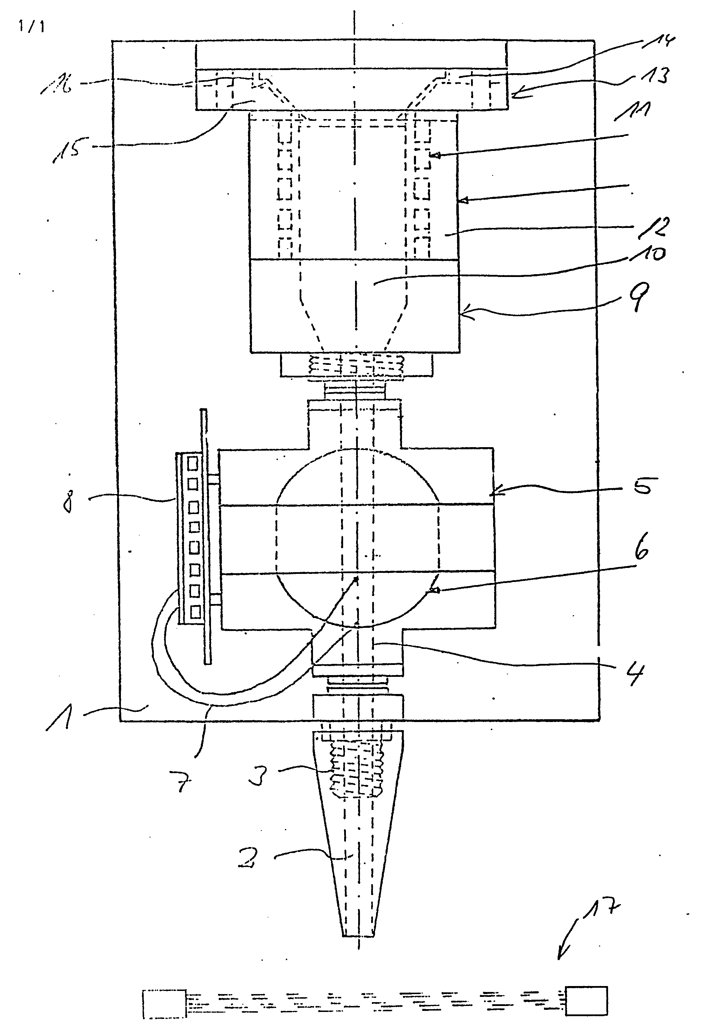

Die Erfindung soll im folgenden anhand eines in der Zeichnung dargestellten Ausführungsbeispiels näher erläutert werden.

In der Zeichnung ist ein stationärer Betätigungskopf 1 dargestellt, der an seiner Unterseite eine angeschraubte Ausflusstülle 2 aufweist. Die Ausflusstülle 2 ist auf einen Stutzen 3 geschraubt und setzt einen den Betätigungskopf 1 lotrecht durchlaufenden Flüssigkeitskanal 4 fort. Der Flüssigkeitskanal 4 ist im unteren Bereich des Betätigungskopfes 1 von einem Durchflussmesser 5 umgeben, der eine nur schematisch angedeutete Induktionsspule 6 aufweist, von der aus Leitungen 7 zu einem Messverstärker 8 laufen, der das von der Induktionsspule 6 gemessene Signal verstärkt und verarbeitet.

Oberhalb des Durchflussmessers 5 und über ein Schraubgewinde mit diesem verbunden befindet sich ein Aufnahmeteil 9, das eine Aufnahmeöffnung 10 für den Kopf einer Flasche mit dem darauf befindlichen, Codierringe aufweisenden Gehäuse eines (nicht dargestellten) Magnetventils. Den möglichen Codierringen entsprechend sind im Aufnahmeteil 9 fünf ringförmige Lesespulen 11 angeordnet, die die Codierung erkennen. Um die Lesespulen 11 herum ist eine Betätigungsspule 12 gewickelt, die der Betätigung des Magnetventils der Flasche dient. Der Aufnahmeteil weist einen oberen Flansch 13 auf, der zweiteilig aus einem Oberteil 14 und einem Unterteil 15 gebildet i ist. Zwischen Oberteil 14 und Unterteil 15 verläuft ein nach oben offener Spalt 16, an den eine (nicht dargestellte) Wasserzufuhr angeschlossen wird. Der Spalt 16 verengt sich konisch in axialer Richtung nach unten und mündet im oberen Bereich der Aufnahmeöffnung 10 ringförmig in die Wandung der Aufnahmeöffnung 10, die den Flüssigkeitskanal 4 nach oben hin fortsetzt.

Nach jedem Entfernen einer Flasche aus der Aufnahmeöffnung 10 wird automatisch eine vorbestimmte Wassermenge durch den Kanal 16 in die Aufnahmeöffnung 10 bzw. den Flüssigkeitskanal 4 eingespritzt, so dass dieser gespült und von Getränkeresten befreit wird.

Selbstverständlich ist es mit dem stationären Betätigungskopf 1 möglich, Mehrfachdosierungen vorzunehmen, d.h. eine Vielzahl von Gläsern nacheinander mit demselben Getränk zu füllen. Die Spülung wird hierbei selbstverständlich erst durchgeführt, wenn die Gläser gefüllt sind, d.h. die Flasche aus der Aufnahmeöffnung 10 herausgenommen wird.

Zweckmässigerweise ist unterhalb des stationären Betätigungskopfes 1 ein Flüssigkeitsabfluss für das Spülwasser vorgesehen.

Es hat sich in der Praxis gezeigt, dass die Möglichkeit, Getränke an verschiedenen Orten innerhalb eines begrenzten Bewegungsraums auszuschenken, keine wesentlichen Vorteile bietet. Auch im Barbetrieb kommt es dem Kunden nur darauf an, die Originalflasche zu sehen und zu erkennen, dass sein Drink aus der Originalflasche abgefüllt wird. Mit dem erfindungsgemässen Gerät steht nunmehr eine universelle Ausschankstation zur Verfügung, über die alle Getränke eines Restaurationsbetriebes dosiert und abgerechnet werden können.

Selbstverständlich muss die Erkennung der Codierung nicht mit Hilfe von Codierringen und entsprechenden Lesespulen 11 erfolgen. Ebenso ist es denkbar, ein optisch abtastbares Muster als Codierung zu verwenden. Durch die jeweilige Codierung kann der Durchflussmesser 5 die Information erhalten, welche Menge ausgeschenkt werden soll.

Vorzugsweise ist ùnterhalb der Ausflusstülle 2 ein Sensor (17) für ein unter die Ausflusstülle 2 gestelltes Glas vorgesehen. Der Sensor kann die Öffnung der Betätigungsspule 12 bewirken. Alternativ kann die Betätigungsspule 12 öffnen, wenn der Sensor ein untergestelltes Glas gemeldet hat und anschliessend die Flasche in die Aufnahmeöffnung geschoben wird.

Der Sensor 17 kann mechanisch oder vorzugsweise als Lichtschranke ausgebildet sein. Da die Lichtschranke auf den Rand des Glases reagiert, wird eine verzögerte Reaktion der Betätigungsspule 12 auf das Signal der Lichtschranke zweckmässig sein. Bei Mehrfachdosierungen kann der Sensor 17 auch die Öffnungszeit der Betätigungsspule 12 beenden.

Der Durchflussmesser ist vorzugsweise als magnetisch induktiver Durchflussmesser ausgebildet, da sich dieser sehr klein aufbauen lässt und damit eine kompakte Form des Betätigungskopfes 1 ermöglicht und darüber hinaus sehr nah an die strömende Flüssigkeit hingebracht werden kann, so dass ein sehr geringes Totvolumen entsteht.

Die Registrierùng der ausgeschenkten Flüssigkeit wird von dem Durchflussmesser gesteuert oder zumindest beeinflusst, so dass für den Fall, dass die Betätigungsspule 12 zwar zur Öffnung des Magnetventils angesteuert wird, wegen einer Verklemmung oder eines ähnlichen Defektes des Magnetventils jedoch keine Flüssigkeit durchfliesst, keine Registrierung erfolgt.

**Patentansprüche**

1. Vorrichtung zum dosierten Ausschenken und Registrieren von aus einer Flasche ausgeschenkten Flüssigkeiten, bestehend aus einem am Flaschenhals angebrachten, magnetisch zu öffnenden und in seiner Ruhestellung geschlossenen Magnetventil, dessen Gehäuse mit Codierzeichen versehen ist, mit einem ortsfest installierten Betätigungskopf (1) mit einer nach oben offenen Aufnahmeöffnung (9), einer Betätigungsspule (12) für das in die Aufnahmeöffnung (9) eingeführte Magnetventil und einer Leseeinrichtung (11) für die Codierzeichen, und mit einer stationär installierten Registriereinrichtung, die mit dem Betätigungskopf (1) verbunden ist, dadurch gekennzeichnet, dass der Betätigungskopf (1) einen Flüssigkeitskanal (4), einen der Betätigungsspule (12) nachgeschalteten Durchflussmesser (5), der die Öffnungszeit der Betätigungsspule (12) steuert, und einen Einspritzspalt (16) aufweist, durch den eine vorbestimmte Wassermenge in den Flüssigkeitskanal (4) nach der Dosierung einspritzbar ist.

2. Vorrichtung nach Anspruch 1, dadurch gekennzeichnet, dass ein die Leseeinrichtung (11) für die Codierzeichen wirksam schaltender Schalter durch das Einschieben der Flasche in den Betätigungskopf (1) betätigt wird.

3. Vorrichtung nach Anspruch 1 oder 2, dadurch gekennzeichnet, dass die Wassermenge in Abhängigkeit von der gelesenen Codierung einstellbar ist.

4. Vorrichtung nach einem der Ansprüche 1 bis 3, dadurch gekennzeichnet, dass sich der Einspritzspalt (16) axial in Strömungsrichtung gesehen konisch verengt und an der Umfangswandung des Flüssigkeitskanals (4) ringartig in diesen mündet.

5. Vorrichtung nach einem der Ansprüche 1 bis 4, dadurch gekennzeichnet, dass unterhalb des Betätigungskopfes (1) ein Sensor (17) für ein unter den Betätigungskopf gestelltes Glas angeordnet ist, der die Öffnung durch die Betätigungsspule (12) steuert.

**Revendications**

1. Dispositif de débit avec enregistrement de quantités mesurées de liquides à partir d'une bouteille, constitué d'une électrovalve montée au niveau du goulot de la bouteille, s'ouvrant magnétiquement et fermée dans sa position de repos, dont le boîtier est pourvu de signes de codage, d'une tête d'actionnement (1) montée fixe, d'une ouverture de réception (10) s'ouvrant vers le haut, d'une bobine d'actionnement (12) pour l'électrovalve introduite dans l'ouverture de réception (10) et d'un dispositif de lecture (11) pour les signes de codage, ainsi que d'un dispositif d'enregistrement monté fixe et relié à la tête d'actionnement (1), caractérisé en ce que la tête d'actionnement (1) comporte un canal à liquide (4), un débitmètre (5) monté en aval de la bobine d'actionnement (12) et pilotant le temps d'ouverture de cette bobine d'actionnement (12) et un interstice d'injection (16) par lequel une quantité d'eau définie peut être injectée dans le canal à liquide (4) après le débit d'une quantité mesurée de liquide.

2. Dispositif suivant la revendication 1, caractérisé en ce qu'un interrupteur activant le dispositif de lecture (11) pour les signes de codage est actionné par l'introduction de la bouteille dans la tête d'actionnement (1).

3. Dispositif suivant la revendication 1 ou 2, caractérisé en ce que la quantité d'eau peut être réglée en fonction du codage lu.

4. Dispositif suivant l'une quelconque des revendications 1 à 3, caractérisé en ce que l'interstice d'injection (16) va en se rétrécissant de manière conique axialement dans le sens d'écoulement et s'ouvre annulairement dans la paroi périphérique du canal d'écoulement (4).

5. Dispositif suivant l'une quelconque des revendications 1 à 4, caractérisé en ce qu'en dessous de la tête d'actionnement (1) est installé un capteur (17) qui est destiné à un verre posé en dessous de la tête d'actionnement et qui pilote l'ouverture par l'intermédiaire de la bobine d'actionnement (12).

**Claims**

1. Device for measured dispensing and recording of fluids dispensed from a bottle, consisting of a magnetic valve fitted to the neck of the bottle and opened magnetically and closed in its rest state, with its housing provided with coded symbols, with an operating head (1) installed in a fixed position, with an upwardly open receiving opening (9), an operating winding (12) for the magnetic valve introduced to the receiving opening and a reading device (11) for the coded symbols, and with a recording device installed in stationary manner and connected to the operating head (1), characterized in that the operating head (1) comprises a fluid channel (4), a flow-meter (5) connected downstream of the operating winding (12), which controls the opening time of the operating winding (12), and an injection gap (16), through which a predetermined quantity of water can be sprayed into the fluid channel (4) after the dispensing.

2. Device according to claim 1, characterized in that a switch for switching on the reading device (11) for the coded symbols is operated by insertion of the bottle into the operating head (1).

3. Device according to claim 1 or 2, characterized in that the water quantity is adjustable in dependence upon the coding which is read.

4. Device according to one of claims 1 to 3, characterized in that the injection gap (16) narrows conically axially regarded in the direction of flow and opens at the peripheral wall of the fluid channel (4) annularly into the same.

5. Device according to one of claims 1 to 4, characterized in that a sensor (17) for a glass placed under the operating head is arranged beneath the operating head (1), which sensor controls the opening by the operating winding (12).

1/1